# EUROPEAN PATENT APPLICATION

(11) **EP 3 904 856 A1**
(43) Date of publication of application: **03.11.2021**
(21) Application number: 19902189.0
(22) Date of filing: 30.12.2019
(51) Int. Cl.: G01M 3/26, H01R 13/52, G01K 11/32, H01M 2/02

(54) **ELECTRICAL CONNECTOR AND QUICK-CHANGE CONNECTOR FOR BATTERY PACK OF ELECTRIC VEHICLE**

(30) Priority: 29.12.2018 CN 201811642277
(71) Applicant: Aulton New Energy Automotive Technology Group, Shanghai 201315 (CN)
(72) Inventor: ZHANG, Jianping, Shanghai 201315 (CN); HUANG, Chunhua, Shanghai 201315 (CN)
(74) Representative: Schwarz & Partner Patentanwälte GmbH
(86) International application number: PCT/CN2019/130080
(87) International publication number: WO 2020/135882

(57) **Abstract**

An electrical connector and a quick-change connector for a battery pack of an electric vehicle, the electrical connector (21) comprising a pole (211) and a first accommodating cavity (212) surrounding the pole (211), and further comprising a seal detection device. The seal detection device comprises a pressure measurement unit, the pressure measurement unit being located in the first accommodating cavity (212) and being used for measuring the pressure change when the first accommodating cavity (212) is in a sealed state. The pressure measurement unit measures the change of air pressure in the cavity of the quick-change connector, so that whether the sealing of the quick-change connector is normal is determined in a timely manner, thereby issuing a warning in a timely manner and avoiding a vehicle fault.

## Description

This application claims priority to Chinese Patent Application No. 2018116422779, filed on December 29, 2018, the entire contents of which are incorporated herein by reference.

### FIELD

The present invention belongs to the technical field of quick-change connectors for electric vehicles, and particularly to an electrical connector and a quick-change connector for a battery package of an electric vehicle.

### BACKGROUND

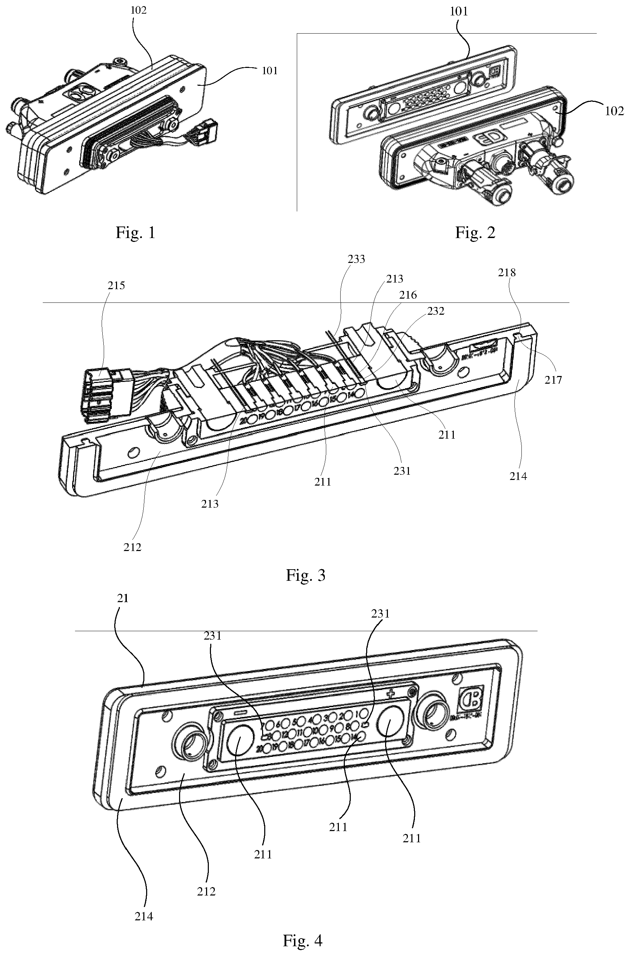

Electric vehicles use quick-change connectors to realize quick-change plug-in functions. Figs. 1 and 2 show a quick-change connector in a prior art. The quick-change connector includes a battery-side connecting part 101 and a vehicle-side connecting part 102. The battery-side connecting part 101 is configured to be connected with a battery pack; the vehicle-side connecting part 102 is configured to be connected with a vehicle. After the battery-side connecting part 101 and the car end connecting part 102 are combined, electrodes of the battery-side connecting part 101 are connected to electrodes of the vehicle-side connecting part 102 correspondingly, a gap between the battery-side connecting part 101 and the vehicle-side connecting part 102 is sealed by a seal gasket, and a cavity exists between the battery-side connecting part 101 and the vehicle-side connecting part 102.

A safe and reliable electrical connection is very important during the implementation of plug-in. When the requirement for reliable electrical connection is satisfied, the sealing requirements should be improved accordingly. If a sealing level of the quick-change connector does not reach an IP67 standard (a protection and safety level), when a vehicle is running, it will cause the following case: the protection for the gap between the battery-side connecting part 101 and the vehicle-side connecting part 102 of the quick-change connector is failed, water invasion occurs to cause a failure in electrical performance, the vehicle then reports an insulation failure, a vehicle controller will cut off the electrical protection, and as a result, the vehicle cannot be driven, and in serious cases, electrical short-circuit due to seal failure will cause the vehicle to self-ignite. Therefore, sealing for the connector is particularly important.

At present, a sealing condition of the quick-change connector cannot be automatically detected on the vehicle. Only when the vehicle detects water in the connector after the seal protection fails, an insulation value becomes lower than a set value, and the vehicle alarms and stops. In fact, it cannot be effectively controlled at this time. The vehicle can only continue to run after being maintained in a 4S shop (a sales shop integrating vehicle sales, maintenance, accessories and information services). This causes great inconvenience to a user and affects the user's driving sense of a quick-change vehicle.

### SUMMARY

A technical problem to be solved by embodiments of the present invention is to provide an electrical connector and a quick-change connector for a battery pack of an electric vehicle to overcome the defect that the sealing condition of the quick-change connector of the battery pack of the electric vehicle in the prior art cannot be automatically detected on the vehicle.

The embodiments of the present invention solve the above-mentioned technical problem through the following technical solutions.

The present invention provides an electrical connector, which includes poles and a first accommodating cavity surrounding the poles, and further includes a seal detection device. The seal detection device includes a pressure detection unit. The pressure detection unit is located in the first accommodating cavity and configured to detect a pressure change when the first accommodating cavity is in a sealed state.

Preferably, the electrical connector further includes a strain controller; the strain controller is configured to receive the pressure change and to send out an alarm instruction signal when the pressure change is greater than a preset value.

Preferably, the pressure detection unit includes an optical fiber strain sensor, a detection end of the optical fiber strain sensor is arranged in the first accommodating cavity, an optical fiber of the optical fiber strain sensor is led out of the first accommodating cavity, and the strain controller is arranged outside the first accommodating cavity and connected with the optical fiber to receive the pressure change.

Preferably, the electrical connector is provided with a lead-out hole through which the optical fiber is led out of the first accommodating cavity, and a gap between the optical fiber and the lead-out hole is sealed by a sealing part.

Preferably, the sealing part includes an epoxy resin adhesive sealing part or an organic silicone adhesive sealing part.

Preferably, the strain controller is electrically connected to a battery management system of a vehicle and configured to send the alarm instruction signal to the battery management system.

Preferably, the battery management system is electrically connected to a vehicle controller of the vehicle and configured to send the alarm instruction signal to the vehicle controller.

Preferably, the electrical connector further includes an alarm unit electrically connected to the strain controller, and the alarm unit is configured to alarm after receiving the alarm instruction signal.

The present invention further provides a quick-change connector for a battery pack of an electric vehicle, which includes a vehicle-side connecting part and the electrical connector of the present invention; the electrical connector is configured as a battery-side connecting part of the quick-change connector and is configured to be connected to the battery pack; the vehicle-side connecting part is configured to be connected to the vehicle; the vehicle-side connecting part is butted with the electrical connector to seal the first accommodating cavity.

Preferably, the vehicle-side connecting part is provided with a second contact portion, and a first contact portion and the second contact portion are arranged correspondingly; the quick-change connector further includes a seal gasket, and the first contact portion and the second contact portion squeeze the seal gasket so that the vehicle-side connecting part is butted with the electrical connector.

The positive and progressive effect of the present invention is that the pressure detection unit detects the change of air pressure in the cavity of the quick-change connector, to determine, in a timely manner, whether the sealing of the quick-change connector is normal, thereby making an alarm in a timely manner and avoiding a vehicle fault.

### BRIEF DESCRIPTION OF THE DRAWINGS

Fig. 1 is a three-dimensional schematic diagram of a quick-change connector in a prior art.
Fig. 2 is a structural diagram of a battery-side connecting part and a vehicle-side connecting part of a quick-change connector in a prior art.
Fig. 3 is a cross-sectional view of an electrical connector according to a preferred embodiment of the present invention.
Fig. 4 is a partial structural diagram of an electrical connector according to a preferred embodiment of the present invention.
Fig. 5 is a schematic structural diagram of an optical fiber strain sensor of an electrical connector according to a preferred embodiment of the present invention.
Fig. 6 is a partial structural diagram of an electrical connector including an optical fiber strain sensor according to a preferred embodiment of the present invention.
Fig. 7 is a cross-sectional view of a quick-change connector for a battery pack of an electric vehicle according to a preferred embodiment of the present invention.
Fig. 8 is a structural diagram of a quick-change connector for a battery pack of an electric vehicle according to a preferred embodiment of the invention.

### DETAILED DESCRIPTION

The following further illustrates the present invention by way of a preferred embodiment, but the present invention is not limited to the scope of the described embodiment.

This embodiment provides an electrical connector. Referring to Fig. 3, Fig. 4, and Fig. 5, the electrical connector 21 includes a plurality of poles 211 and a first accommodating cavity 212 surrounding the poles 211. The electrical connector 21 further includes a seal detection device. The seal detection device includes a pressure detection unit. The pressure detection unit is located in the first accommodating cavity 212 and configured to detect a pressure change when the first accommodating cavity 212 is in a sealed state. In this embodiment, the pressure detection unit is implemented by using optical fiber strain sensors 213, and the number of optical fiber strain sensors 213 is 2. The optical fiber strain sensor 213 includes a strain sheet 231, a transparent glass tube 232, and an optical fiber 233. The working principle of the optical fiber strain sensor is as follows: a laser beam with a specific wavelength is emitted to the front strain sheet 231 through the optical fiber 233; when air pressure changes, the strain sheet deforms, which affects the wavelength of counter light; the change in air pressure can be calculated by the change in wavelength.

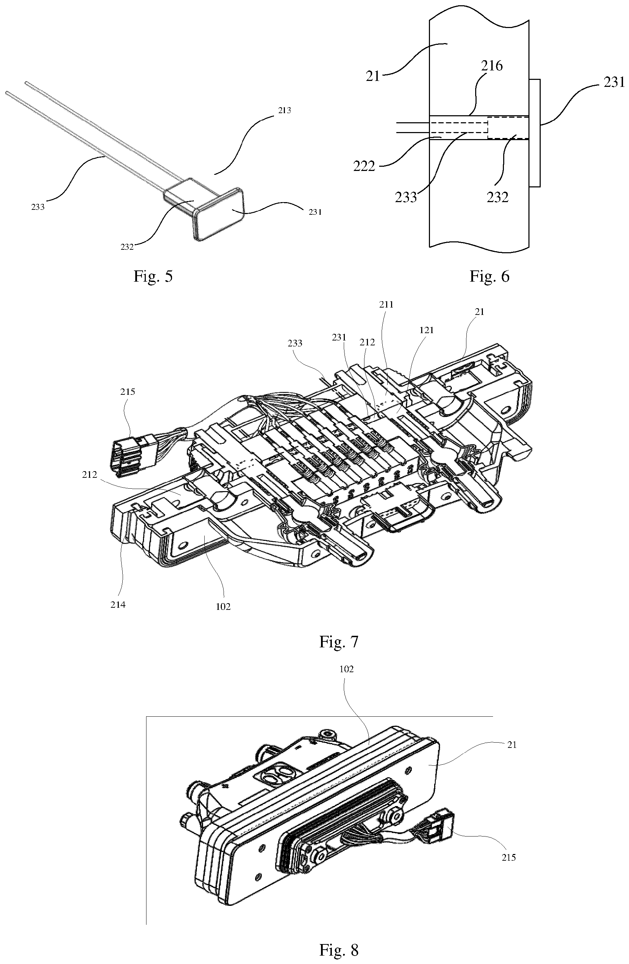

In this embodiment, referring to Fig. 6, a detection end (i.e., the strain sheet 231) of the optical fiber strain sensor 213 is arranged in the first accommodating cavity 212, and the optical fiber 233 of the optical fiber strain sensor 213 is led out of the first accommodating cavity 212. The electrical connector 21 is provided with a lead-out hole 216, a transparent glass tube 232 (represented by a dotted line) is embedded in the lead-out hole 216, the optical fiber 233 passes through the lead-out hole 216 and is led out of the outside of the first accommodating cavity 212, and a portion of the optical fiber 233 in the lead-out hole 216 is represented by a dotted line. A gap between the optical fiber 233 and the lead-out hole 216 is sealed by a sealing part 222. When there is a gap between the transparent glass tube 232 and an inner wall of the lead-out hole 216, the sealing part also fills the gap. The sealing part is an epoxy resin adhesive sealing part. In other optional embodiments, the sealing part is an organic silicone adhesive sealing part. Both epoxy resin adhesive and organic silicone adhesive are commercially available materials. A plug 215 of the electrical connector 21 is configured to be connected with a battery pack of a vehicle.

The electrical connector of this embodiment further includes a strain controller (not shown in the figure). The strain controller is arranged outside the first accommodating cavity 212. The strain controller is connected to the optical fiber to receive a pressure change. When the pressure change is greater than a preset value, the strain controller sends out an alarm instruction signal. For example, suppose an initial pressure value in the first accommodating cavity 212 is A, when a pressure value in the first accommodating cavity 212 is less than A*80%, that is, when the pressure change is greater than 20% of the initial pressure value, it means that the sealing performance of the first accommodating cavity 212 no longer meets the requirements, and the strain controller sends out an alarm instruction signal. Specifically, in an initial state, the strain controller emits laser of a first wavelength to the strain sheet 231 through the optical fiber 233, and a wavelength of received counter light that is returned is defined as a second wavelength; the strain controller calculates the initial pressure value in the first accommodating cavity 212 according to the second wavelength. With the extension of a use period of the electrical connector, when the strain controller emits laser of the first wavelength to the strain sheet 231 through the optical fiber 233, a wavelength of received counter light that is returned is defined as a third wavelength; the strain controller is based on the third wavelength, and the strain controller can calculate a change amplitude of the pressure value in the first accommodating cavity 212 relative to the initial pressure value according to a change of the third wavelength relative to the second wavelength. When the change amplitude is greater than a preset value (e.g., 20%), the strain controller sends out an alarm instruction signal. In this embodiment, the strain controller is electrically connected to a battery management system of the vehicle and sends the alarm instruction signal to the battery management system. The battery management system is electrically connected to a vehicle controller of the vehicle. After receiving the alarm instruction signal from the strain controller, the battery management system sends the alarm instruction signal to the vehicle controller. The vehicle controller sends a prompt message to a user (e.g., a driver) of the vehicle through a center console, and the user of the vehicle conducts inspection and repair in time.

In other optional embodiments, the electrical connector further includes an alarm unit, and the alarm unit is electrically connected to the strain controller and configured to alarm after receiving the alarm instruction signal. The alarm unit includes at least one of an alarm light and a buzzer. The user of the vehicle can be informed in time of deterioration in the sealing performance of the electrical connector according to a prompt of the alarm light or the buzzer so that the user can have the vehicle inspected and repaired in time.

The electrical connector 21 of this embodiment is provided with a first contact portion, and a seal gasket 214 matching the first contact portion in shape is arranged on the first contact portion. Referring to Fig. 3, the seal gasket 214 includes an engaging portion 217, and the engaging portion 217 is embedded in a groove 218 in the first contact portion. When the electrical connector of this embodiment serve as a battery-side connecting part of a quick-change connector for the battery pack of the electric vehicle to be butted with the vehicle-side connecting part, a second contact portion on the vehicle-side connecting part and the first contact portion of the electrical connector 21 squeeze the seal gasket 214 to seal the first accommodating cavity 212.

The electrical connector of this embodiment detects the change of the air pressure in the first accommodating cavity through the pressure detection unit, and determines in time whether the sealing of the first accommodating cavity is normal, thereby making an alarm in a timely manner and improving the safety of the electrical connection at a very low cost.

This embodiment also provides a quick-change connector for a battery pack of an electric vehicle. Referring to Figs. 7 and 8, the quick-change connector includes the vehicle-side connecting part 102 and the electrical connector 21 of this embodiment. The electrical connector 21 serves as the battery-side connecting part of the quick-change connector and is connected to the battery pack through the plug 215. The vehicle-side connecting part 102 is configured to be connected with the vehicle. The vehicle-side connecting part 102 is butted with the electrical connector 21, and the second contact portion of the vehicle-side connecting part 102 and the first contact portion of the electrical connector 21 squeeze the seal gasket 214 to seal the first accommodating cavity 212.

After the vehicle-side connecting part 102 is butted with the electrical connector 21, the poles 211 of the electrical connector 21 are connected to corresponding poles 121 in the vehicle-side connecting part 102 to transmit an electrical signal.

After the vehicle-side connecting part 102 is butted with the electrical connector 21, the sealing level of the first accommodating cavity 212 meets the IP67 standard. After the vehicle-side connecting part 102 is butted with the electrical connector 21, the strain controller calculates the initial pressure value in the first containing cavity 212 according to a wavelength of laser reflected by the strain sheet 231 of the optical fiber strain sensor 213. The strain controller stores the initial pressure value. During the use of the quick-change connector of this embodiment, the strain controller calculates a real-time pressure value in the first accommodating cavity 212 according to a wavelength of laser reflected by the strain sheet 231 of the optical fiber strain sensor 213. The strain controller stores the real-time pressure value and calculates a difference between the real-time pressure value and the initial pressure value. When the real-time pressure value is reduced by more than a preset amplitude value relative to the initial pressure value, it means that the sealing condition of the first accommodating cavity 212 does not meet the IP67 standard. For example, suppose that the initial pressure value in the first accommodating cavity 212 is A, and when the real-time pressure value in the first accommodating cavity 212 is less than A•80%, that is, the reduction of the real-time pressure value relative to the initial pressure value is greater than 20%, the strain controller sends an alarm instruction signal to the battery management system. After receiving the alarm instruction signal from the strain controller, the battery management system sends the alarm instruction signal to the vehicle controller. The vehicle controller sends a prompt message to a user (e.g., a driver) of the vehicle through a center console, and the user of the vehicle conducts inspection and repair in time.

In other optional embodiments, the electrical connector further includes an alarm unit, and the alarm unit is electrically connected to the strain controller and configured to alarm after receiving the alarm instruction signal. The alarm unit includes at least one of an alarm light and a buzzer. The user of the vehicle can be informed in time of deterioration in the sealing performance of the electrical connector according to a prompt of the alarm light or the buzzer so that the user can have the vehicle inspected and repaired in time.

The quick-change connector for a battery pack of an electric vehicle of this embodiment detects the change of air pressure in the cavity (i.e., the first accommodating cavity) of the quick-change connector through the pressure detection unit, and determines in time whether the sealing of the quick-change connector is normal, thereby making an alarm in a timely manner, avoiding a vehicle fault, and improving the safety of the electric vehicle at a very low cost.

Although the specific embodiments of the present invention are described above, those skilled in the art should understand that these are only examples, and various changes or modifications can be made to these embodiments without departing from the principle and essence of the present invention. Therefore, the protection scope of the present invention is defined by the appended claims.

## Claims

1. An electrical connector, comprising poles and a first accommodating cavity surrounding the poles, the electrical connector further comprising a seal detection device, the seal detection device comprising a pressure detection unit, the pressure detection unit being located in the first accommodating cavity and configured to detect a pressure change when the first accommodating cavity is in a sealed state.

2. The electrical connector according to claim 1, further comprising a strain controller, the strain controller being configured to receive the pressure change and to send out an alarm instruction signal when the pressure change is greater than a preset value.

3. The electrical connector according to claim 2, wherein the pressure detection unit comprises an optical fiber strain sensor, a detection end of the optical fiber strain sensor is arranged in the first accommodating cavity, an optical fiber of the optical fiber strain sensor is led out of the first accommodating cavity, and the strain controller is arranged outside the first accommodating cavity and connected with the optical fiber to receive the pressure change.

4. The electrical connector according to claim 3, wherein the electrical connector is provided with a lead-out hole through which the optical fiber is led out of the first accommodating cavity, and a gap between the optical fiber and the lead-out hole is sealed by a sealing part.

5. The electrical connector according to claim 4, wherein the sealing part comprises an epoxy resin adhesive sealing part or an organic silicone adhesive sealing part.

6. The electrical connector according to claim 2, wherein the strain controller is electrically connected to a battery management system of a vehicle and configured to send the alarm instruction signal to the battery management system.

7. The electrical connector according to claim 6, wherein the battery management system is electrically connected to a vehicle controller of the vehicle and configured to send the alarm instruction signal to the vehicle controller.

8. The electrical connector according to claim 2, further comprising an alarm unit electrically connected to the strain controller, the alarm unit being configured to alarm after receiving the alarm instruction signal.

9. A quick-change connector for a battery pack of an electric vehicle, comprising a vehicle-side connecting part and an electrical connector according to any one of claims 1 to 8, wherein the electrical connector is configured as a battery-side connecting part of the quick-change connector and is configured to be connected to the battery pack; the vehicle-side connecting part is configured to be connected to the vehicle; the vehicle-side connecting part is butted with the electrical connector to seal the first accommodating cavity.

10. The quick-change connector for the battery pack of the electric vehicle according to claim 9, wherein the vehicle-side connecting part is provided with a second contact portion, and a first contact portion and the second contact portion are arranged correspondingly; the quick-change connector further comprising a seal gasket, the first contact portion and the second contact portion squeeze the seal gasket so that the vehicle-side connecting part is butted with the electrical connector.
